(19) Europäisches Patentamt / European Patent Office / Office européen des brevets

(11) **EP 2 028 944 B1**

(12) **EUROPEAN PATENT SPECIFICATION**

(45) Date of publication and mention
of the grant of the patent:
**03.08.2016 Bulletin 2016/31**

(21) Application number: **07725546.1**

(22) Date of filing: **21.05.2007**

(51) Int Cl.:
*A21D 2/32* (2006.01)     *A21D 2/36* (2006.01)
*A21D 2/38* (2006.01)     *A23L 29/10* (2016.01)
*A23L 29/212* (2016.01)    *A23L 29/231* (2016.01)
*A23L 29/238* (2016.01)    *A23L 29/262* (2016.01)
*A23L 29/269* (2016.01)    *C08B 31/06* (2006.01)
*C08H 99/00* (2010.01)     *C08L 3/04* (2006.01)
*A21D 2/18* (2006.01)

(86) International application number:
**PCT/EP2007/004650**

(87) International publication number:
**WO 2007/134878 (29.11.2007 Gazette 2007/48)**

(54) **COMPOSITION FOR REDUCING BAKING LOSSES**

ZUSAMMENSETZUNG ZUR VERRINGERUNG VON SCHWUND BEIM BACKEN

COMPOSITION DESTINÉE À RÉDUIRE LES PERTES À LA CUISSON

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **24.05.2006 EP 06090088
25.05.2006 US 808337 P**

(43) Date of publication of application:
**04.03.2009 Bulletin 2009/10**

(73) Proprietor: **Bayer Intellectual Property GmbH
40789 Monheim am Rhein (DE)**

(72) Inventors:
• **PILLING, Jens
44287 Dortmund (DE)**
• **BANAFA, Walid
10437 Berlin (DE)**

(74) Representative: **Beyer, Andreas
Patentanwälte Bressel und Partner mbB
Potsdamer Platz 10
10785 Berlin (DE)**

(56) References cited:
EP-A2- 0 245 727     WO-A2-02/34923
DE-A1- 2 854 291     US-A- 5 306 513

• SINGH SIDHU J P ET AL: "Dough characteristics and baking studies of wheat flour fortified with xanthan gum." INTERNATIONAL JOURNAL OF FOOD PROPERTIES, DEP. OF FOOD SCI. & TECH., GURU NANAK DEV UNIV., AMRITSAR 143 005, PUNJAB, INDIA. E-MAIL JAIPAL(A)GOPLAY.COM, vol. 5, no. 1, 2002, pages 1-11, XP009069723 cited in the application
• JAI PAL SINGH SIDHU ET AL: "Incorporation of carboxy methyl cellulose in wheat flour: rheological, alveographic, dough development, gas formation/retention, baking and bread firmness studies." INTERNATIONAL JOURNAL OF FOOD PROPERTIES, DEP. OF FOOD SCI. & TECH., GURU NANAK DEV UNIV., AMRITSAR 143 005, INDIA. E-MAIL JAIPAL(A)GOPLAY.COM, vol. 3, no. 3, 2000, pages 407-419, XP009074472 cited in the application
• YASEEN A A E ET AL: "Effect of pectin and alpha-amylase on the microstructure and staling of bread" POLISH JOURNAL OF FOOD AND NUTRITION SCIENCES, vol. 10, no. 4, 2001, pages 19-25, XP009074473 ISSN: 1230-0322 cited in the application
• MORGENSTERN G: "Frischhaltung roggenbetonter Brotsorten." BROT & BACKWAREN , BUNDESANSTALT FÜR GETREIDE-, KARTOFFEL- & FETTFORSCHUNG, DETMOLD, GERMANY, vol. 42, no. 4, 1994, page 23, XP009075213

**(Cont. next page)**

Remarks:
The file contains technical information submitted after the application was filed and not included in this specification

Remarks:
The file contains technical information submitted after the application was filed and not included in this specification

**EP 2 028 944 B1**

**Description**

The present invention relates to a composition for reducing baking losses, a combination of wheat flour and at least one baking agent conventional in baking processes being used.

The quality of baked goods is affected by a plurality of factors: the raw materials and formulas; dough standing time, working and also fermentation and baking conditions.

The choice of wheat cultivar has a great effect on the features of baking quality such as protein content and wet-gluten content, baking volume and sedimentation value.

Those skilled in the art take baking loss (also known as final baking loss) to be the weight loss of the dough or dough pieces during baking. Primarily it is evaporating dough water and also to a minimal extent other volatile components such as alcohol, organic acids and esters; therefore, those skilled in the art can also speak of "water loss".

The baking loss proceeds in parallel to the temperature course in the dough piece during baking, that is to say it is greatest in the edge regions (crust), because the highest temperature prevails there. In addition, the baking loss is greatly dependent on the baked product size or baked product surface area. Relatively small baked products have a higher baking loss in percentage terms than larger baked products. In addition to the size and shape of the bakery product, other factors also have an influence: that is to say dough processing and dough standing, the crust fraction, baking time and oven temperature.

The average baking losses for small bakery products are 18-22%, in the case of 1000g bread 13%, and in the case of 2000g bread 11 %.

High baking losses have a disadvantageous effect on the baked product yield of the baker and thus on the weight and also the number of baked goods to be sold.

In addition, the water losses during the baking process have a disadvantageous effect on the freshness of the baked goods which thereby age earlier, that is become stale.

This in turn impairs the flavor of the baked goods and thus what is termed "mouth feel".

In baking processes, the addition of baking agents is a conventional procedure. Those skilled in the art take baking agents to mean all substances which (are to) improve the volume, yield, flavor, freshness retention and/or dough processing.

Conventional baking agents are, for example, xanthan, carboxymethyl cellulose (CMC), guar seed meal, pectins, carob bean meal, emulsifiers or soy flour.

The use of baking agents gives rise to additional costs and in most cases requires a more or less complex adaptation of the dough processing and baking processes. In contrast, reducing the baking losses, however, is not always high enough that in the long term the use of the baking agent is economically rational.

Therefore, there is a great requirement for compositions and uses which reduce the baking losses on production of bakery products and give rise to properties such as improved flavor and improved mouth feel, and also increase the baking yield of the baker.

The present invention relates to a composition which comprises wheat flour having a phosphate content of at least 2 $\mu$mol of C-6-P/g of starch in combination with at least one baking agent in an amount which reduces the baking losses more greatly than compositions which comprise wheat flour having a phosphate content of less than 2 $\mu$mol of C-6-P/g of starch, wherein the baking agent is selected from xanthan, carboxymethyl cellulose, carob bean meal, an emulsifier, guar seed meal or soy flour.

In a preferred embodiment, the composition according to the invention comprises wheat flour having a phosphate content of at least 2 $\mu$mol of C-6-P/g of starch in combination with emulsifier sodium stearoyl-2-lactylate

The individual components in the context of the present invention are taken to mean the following: one component comprises a flour having a phosphate content of at least 2 $\mu$mol of C-6-P/g of starch; the other component the respective baking agent together with an unmodified one, since a baked good cannot be produced from the baking agent alone.

The term "phosphate content" in the context of the present invention is to be taken to mean the content of phosphate groups which are bound to carbon atom position "6" of the glucose monomers of the flour. In principle, in the starch, in vivo positions C2, C3 and C6 of the glucose units can be phosphorylated. The phosphate content in the C6 position (=C-6-P content), in the context of the present invention, is determined via glucose-6-phosphate determination by means of the optical-enzymatic test described hereinafter (according to Nielsen et al., 1994, Plant Physiol. 105, 111-117).

The expression "phosphate content of at least 2 $\mu$mol of C-6-P/g of starch", in the context of the present invention, means that the content of phosphate groups which are bound to carbon atom position "6" of the glucose monomers is at least 2 $\mu$mol per gram of starch.

The flour used is modified in such a manner that the phosphate content is at least 2 $\mu$mol of C-6-phosphate/g of starch. In a preferred embodiment, the flour has a content of 2 to 10 $\mu$mol of C-6-phosphate/g of starch, particularly preferably 2 to 8 $\mu$mol of C-6-phosphate/g of starch, and very particularly preferably 4 to 6 $\mu$mol of C-6-phosphate/g of starch.

The phosphate content of wheat flour can be modified by various processes, this can proceed, for example, by genetic modification of the wheat plant or by means of chemical phosphorylation of the extracted starch.

In a preferred embodiment, the wheat flour underlying the invention is modified. In a particularly preferred embodiment, the wheat flour underlying the invention is genetically modified. In the context of the present invention, "genetically modified wheat flour" means that the wheat flour originates from grains of a genetically modified wheat plant, its genetic modification leading to increase of the phosphate content of the starch, compared with the phosphate content of a corresponding non-genetically modified wheat plant. In non-modified wheat flour, phosphate is not detectable at all in the starch, or merely in traces.

In a further preferred embodiment, use was made of wheat plants which express an R1 gene (alpha-glucan water dikinase, E.C.2.7.9.4; Lorberth et al. (1998) Nature Biotechnology 16: 473-477) from potatoes (*Solanum tuberosum*). The nucleotide and amino acid sequences are reported in Seq ID No.1 and Seq ID No.2. Production of these plants is extensively described in the patent application WO 02/34923 (examples 1 and 2).

In a further preferred embodiment, the starch of the wheat flour underlying the invention was phosphorylated by chemical agents; this phosphorylation gave rise to an increase in the phosphate content compared with the phosphate content of a corresponding wheat plant which was not chemically phosphorylated.

Use is made of baking agents from the group (but not restricted thereto) xanthan, carboxymethyl cellulose, emulsifiers, carob bean meal, guar seed meal or soy flour.

One of the compositions according to the invention comprises wheat flour having at least 2 $\mu$mol of C-6-phosphate/g of starch and also the baking agent xanthan. Xanthan (E415) is a naturally occurring polysaccharide which is produced in a biotechnological process using fermentation of glucose or sucrose by the bacterium *Xanthomonas campestris*. It is useable in versatile ways, for instance as thickener and stabilizer in the food and building material industries, and also for emulsions in paints and cosmetics. In the food industry it is also used as gluten substitute inter alia in yeast baked goods. Sidhu and Bawa 2002 (Int. Journal of Food Properties 5(1): 1-11) describe that the addition of 0.2% xanthan to wheat flour increased the water absorption from 59 to 60.8%, and the addition of 0.5% xanthan increased it to 62%.

In this context, the ratio of the individual components can be varied to one another in a relatively large range. Preferably, the amount of xanthan added to the flour is between 0.01 to 2%, in particular 0.1 to 1%, and particularly preferably between 0.1 to 0.5%.

A further composition according to the invention comprises wheat flour having at least 2 $\mu$mol of C-6-phosphate/g of starch and also the baking agent carboxymethyl cellulose.

Carboxymethyl cellulose (=CMC; E466), structurally, is chemically modified crystals of plant fibers, that is to say cellulose treated with lyes or chloroacetic acid. CMC is used, inter alia, as gelling agent and thickener and also water retention system and thus serves to prolong the time foods are fresh. Sidhu and Bawa (2000, Int. Journal of Food Properties, 3(3): 407-419), at an addition of 0.1 to 0.5% CMC to the wheat flour, observed an increase in water absorption from 1.4 to 8.6% compared to the control. The specific volume and the additional yield increased by 0.7 to 3.3%, the yields which were above 1% being achieved for the addition of >0.3% CMC, but, according to the authors, this was accompanied with decreasing bread quality ("slightly gummy").

In this context, the ratio of the individual components to one another can be varied within a relatively large range. Preferably, the amount of carboxymethyl cellulose added to the flour is between 0.1 and 2%, in particular 0.1 and 1%, and particularly preferably between 0.2 and 0.5%.

A further preferred composition according to the invention comprises wheat flour having at least 2 $\mu$mol of C-6-phosphate/g of starch and also an emulsifier as baking agent.

Emulsifiers are substances which make it possible to bring into a lasting emulsion components which are actually not miscible with one another. Emulsifiers are distinguished by being soluble in water and also in fat. The molecules of an emulsifier comprise two parts, a lipophilic part and a hydrophobic part. Thus they can stabilize the interfacial boundaries between two actually incompatible substances such as fat and water.

Emulsifiers occur in nature principally in animal or vegetable fats and oils, for example lecithin (from soybean). They are also produced industrially, for example DATEM (diacetyltartaric esters) and SSL (sodium stearoyl-2-lactylate). The emulsifiers are used in the food industry for stabilizing mixed systems. They are used for production of bakery products in order to improve the kneading and fermentation stability of doughs and to achieve in bread a greater volume and softer crumb.

In this context, the ratio of the individual components to one another can be varied in a relatively large range. Preferably, the amount of emulsifiers added to the flour is between 0.1 and 2%, in particular between 0.2 and 1.0%, and particularly preferably between 0.3 and 0.5%.

A further composition preferred according to the invention comprises wheat flour having at least 2 $\mu$mol of C-6-phosphate/g of starch and also the baking agent carob bean meal.

Carob bean meal is obtained by milling the endosperm of ripe seeds of the carob tree (Ceratonia siliqua). Over 90% of the flour comprises polysaccharides, including the galactomannan carubin. The polysaccharides can bind large amounts of water and are therefore also used in the medical sector.

In this context, the ratio of the individual components to one another can be varied within a relatively large range. Preferably the amount of carob bean meal added to the flour is between 0.1 and 2%, in particular between 0.3 and 1.5%, and particularly preferably between 0.5 and 1%.

A further composition preferred according to the invention comprises wheat flour having at least 2 μmol of C-6-phosphate/g of starch and also the baking agent guar seed meal.

Guar seed meal is obtained from the seeds of the Indian cluster bean. It has a high water binding capacity and is therefore also used for diabetic applications.

In this context, the ratio of the individual components to one another can be varied within a relatively large range. Preferably, the amount of guar seed meal added to the flour is between 0.1 and 2%, in particular between 0.3 and 1.5%, and particularly preferably between 0.5 and 1%.

A further preferred composition according to the invention comprises wheat flour having at least 2 μmol of C-6-phosphate/g of starch and also the baking agent soy flour.

Soy is added as soy flour (= soy powder). Improved water binding is ascribed to soy flour. The addition of soy flour to wheat flour has been studied, inter alia, by Stauffer (2002, American Soybean Association, Europe & Maghreb). They describe a reduction of baking losses by 0.5 to 1.5% on addition of 3 to 5% soy powder to wheat flour.

In this context, the ratio of the individual components to one another can be varied within a relatively large range. Preferably, the amount of soy powder added to the flour is between 0.5 and 10%, in particular between 1 and 5%, and particularly preferably between 1 and 3%.

In a preferred embodiment, the wheat flour according to the invention was genetically modified. In a particularly preferred embodiment the wheat flour of the composition according to the invention was phosphorylated by genetic processes. The phosphate content was thereby increased to at least 2 μmol of C-6-P/g of starch.

In the context of the present invention, "genetically modified wheat flour" means that the wheat flour originates from grains of a genetically modified wheat plant, its genetic modification being a phosphorylation which leads to an increase of the phosphate content of the starch compared with the phosphate content of a corresponding non-genetically modified wheat plant. In non-modified wheat flour, the phosphate in the starch is not detectable at all, or merely in traces.

In a preferred embodiment, in the composition according to the invention the flour used is a mixture of at least one modified flour with at least one non-modified flour.

In a further preferred embodiment, in the composition according to the invention, the flour used is composed of two or more different modified flours.

In a further preferred embodiment, the modified flours are genetically modified flours.

The use of these respective flour mixtures to reduce baking losses is likewise disclosed by the present invention.

Also disclosed is a process for reducing baking losses which comprises using one of these flour mixtures.

The use of flours which are composed of qualitatively different flours is absolutely conventional for baking processes. Depending on the end product, this can be a mixture of (qualitatively) different wheat flours or a mixture of wheat flour with flours or starch from other plants, for example corn starch. Conventionally, the flour mixture is composed for the baker as early as in the cereal mill.

"Baker" is taken to mean in this context any form of an operation which processes flour to form bakery products. "Cereal mill" is taken to mean a mechanically operated milling system in which cereal is processed to flour.

The invention discloses a process comprising: using a mixture of various genetically modified flours in combination with at least one baking agent, wherein the baking agent is selected from xanthan, carboxymethyl cellulose, carob bean meal, an emulsifier, guar seed meal or soy flour. In a particularly preferred embodiment, these flours were phosphorylated by means of genetic engineering processes. The flours can be wheat flours.

The baking loss, as weight loss after the baking process, in baked goods according to the process is 1 to 20% less than in baked goods which were produced from non-modified wild-type plant flour using baking agents.

The weight loss can be reduced by 1 to 18%, preferably by 2 to 15%, particularly preferably by 2 to 10%, and very particularly preferably by 3 to 8%.

"Weight loss" is taken to mean by those skilled in the art the baking loss on baking due to water vaporization. The weight loss (= baking loss) is based fundamentally on the dough weight and is the ratio of dough weight to bread weight. It is calculated as follows:

$$\text{Baking loss} = \frac{\text{dough weight} - \text{bread weight}}{\text{dough weight}} \times 100$$

It has been shown that the weight loss of baked goods made from genetically modified wheat flour with addition of the baking agents mentioned in claim 1 is lower as a percentage than in baked goods from non-modified wheat flour;

this is exhibited most greatly in the case of white pan bread (10.6 to 11.1%).

The process for reducing weight losses which comprises using, for baking, wheat flour having a phosphate content of at least 2 $\mu$mol of C-6-P/g of starch in combination with at least one baking agent, is likewise disclosed by the present invention.

In the context of the present invention, the expression "baked goods" is to be taken to mean the broader term for dough pieces which can be in various "states", that is to say unbaked, prebaked, or end-baked.

Those skilled in the art take an unbaked dough to mean a dough for production of baked goods (for example rolls), which comprises all required ingredients, or already formed dough pieces therefrom which have not yet been baked (unbaked dough pieces). In contrast thereto, a prebaked dough is taken to mean dough pieces which, for better storage or for simplification for the consumer, have run through a first baking operation (which can very well comprise a plurality of steps) at the manufacturer's under defined conditions. For the ultimate completion, a further baking operation by the final consumer is required.

End-baked dough pieces are those which are sold correspondingly freshly baked or are produced by the consumers themselves by a final baking operation of prebaked dough pieces.

The expression "correspondingly" in the context of the present invention means that on comparison of a plurality of articles, the articles of interest which are compared with one another were kept under the same conditions. In this context, the expression "correspondingly" means that the baked goods which are compared with one another were produced and tested under the same conditions. With respect to the flour used, the expression "correspondingly" means that the plants from which the flour used was ultimately obtained were grown under the same cultivation conditions.

The expression "wild-type wheat flour", in the context of the present invention, means that it is flour which was produced from cereals of non-modified wheat plants (= wild-type wheat plants). These wheat plants serve as starting material for those wheat plants which were genetically modified for their use according to the invention; that is to say their genetic information, apart from the genetic modification introduced which leads to an increase of the phosphate content, corresponds to that of a genetically modified wheat plant.

In a further embodiment, in the process the baking loss, as water loss after baking, is 1 to 25% less than in baked goods which were manufactured from non-modified wheat flour using a baking agent selected from xanthan, carboxymethyl cellulose, carob bean meal, an emulsifier, guar seed meal or soy flour.

The water loss can be reduced by 5 to 20%, preferably by 5 to 15%, and particularly preferably by 5 to 10%.

Water loss (% water loss based on the water in the dough), in the context of the present invention, is taken to mean the loss of liquid which had occurred after the baking process.

For the production of dough from genetically modified flour and baking agents or dough from non-modified flour, differing amounts of water were weighed out for the same amount of flour in order finally to obtain the same dough consistency. The dough pieces produced have the same weight, but comprise different amounts of water. The dough consistency was measured using the Farinograph (ICC-Standard 115/1), as described hereinafter in the methods part.

If the above-described weight loss (= baking loss due to water evaporation) is based on the amount of water present in the dough, the actual percentage water loss can be calculated:

$$\text{Water loss (\%)} = \frac{\text{dough weight} - \text{bread weight}}{\text{dough water}} \times 100$$

Surprisingly, the results show a significant reduction of baking losses; the water loss based on the water present in the dough was, for all baked goods made from modified TAAB wheat flour, lower than in the case of the corresponding wild-type baked goods. The most greatly reduced was the water loss, at 32.8%, in the case of hamburger rolls (buns) compared with 35.3% in the case of the wild type. The same was found with white pan bread: here, the wild type KWB had a water loss of 27%, but the TAAB white pan bread, only 24 9%.

In addition, it was surprisingly found that the baked goods made from the composition according to the invention have increased bread moisture. Increased bread moisture has a beneficial effect on longer freshness retention and good flavor of the baked good. The bread moisture is dependent on the type of the bakery product and on the baking process. The moisture of the baked goods is calculated after drying as follows:

$$\text{Moisture (\%)} = \frac{\text{initial weight} - \text{end weight}}{\text{initial weight}} \times 100$$

In the case of the use according to the invention, bread moisture is to be taken to mean the moisture content of the entire baked good, that is to say no distinction is to be made between crumb and crust; the latter obviously has a lower moisture than the crumb. Ideally, the bread moisture is increased by 0.5 to 5%. In a preferred embodiment, the bread moisture is increased by 1 to 5%, particularly preferably by 1.5 to 4%, and very particularly preferably by 1.5 to 3%.

In a further preferred embodiment, in the composition according to the invention, the wheat flour comprises a genetically modified starch.

The expression "genetically modified starch", in the present invention, means a wheat starch which has been altered with respect to its phosphate content using genetic methods in such a manner that, compared with wheat starch from non-genetically modified wild-type plants, it has an increased phosphate content. For this, the R1 gene from potatoes (*Solanum tuberosum*) was transformed in wheat (*Triticum aestivum*) as described in WO 02/034923.

In a further embodiment, the genetically modified starch is altered in such a manner that its phosphate content is 2 to 10 $\mu$mol of C-6-phosphate/g of starch. In a preferred embodiment, the starch has a content of 2 to 8 $\mu$mol of C-6-phosphate/g of starch, and very particularly preferably 4 to 6 $\mu$mol of C-6-phosphate/g of starch.

The method further comprises the dough yield being increased by 5 to 25% when the composition according to the invention is used in combination with at least one baking agent, compared with using non-modified wheat flour. Dough yield is taken to mean by those skilled in the art the dough weight based on 100 parts of flour. The dough yield is increased by 1 to 10% compared with the wild-type doughs, preferably by 2 to 8%, and particularly preferably by 3 to 5%.

Surprisingly it has been found that the method also comprises the baking yield being increased by 5 to 25% when the composition according to the invention is used, compared with using non-modified wheat flour.

Baking yield, in the context of the present invention, is to be taken to mean the weight of the finished baked goods based on 100 parts of flour. In a further preferred embodiment, the baking yield is increased by 5 to 20%, particularly preferably by 8 to 15%, and very particularly preferably by 10 to 15%.

The greatest increase in baking yield was found for hamburger buns, in this case the yield of TAAB baked goods was 5% higher than that of the wild-type baked goods.

**Material and methods**

In the examples use was made of the following methods. Use can be made of these methods to carry out the process according to the invention, they are specific embodiments of the present invention, but do not restrict the present invention to these methods. It is known to those skilled in the art that they can carry out the invention in an identical manner by modifying the described methods and/or by replacing individual method parts by alternative method parts.

**1. Plant material for production of the genetically modified flour**

Use was made of wheat plants (*Triticum aesfivum)* which express an R1 gene (alpha-glucan water dikinase; E.C. 2.7.9.4; EMBL AC: Y09533) from *Solanum tuberosum.* Production of these plants (vectors used, selection of transgenic plants) is described extensively in the patent application WO02/34923 (in examples 1 and 2). The nucleotide and amino acid sequences of the R1 gene are given in Seq ID No.1 and Seq ID No.2. The transformation proceeded according to the method of Becker et al., 1994, Plant J. 5(2): 229-307.

From these wheat plants (line TAAB-40A-11-8), ripe grains were harvested. These grains, the flour obtained therefrom and also the starch were studied chemically and rheologically. The controls used were wheat plants of the wild-type variety Florida which were grown under the same cultivation conditions.

**Growth of plants:**

Seed was planted in the open air after prior vernalization.

The plants used were grown and cultivated as follows:

Plant protection: Before the seed was planted, the seed material was pretreated with imidacloprid (Gaucho®, Bayer) to control insect damage (100cc/100kg of seed material). Pre-emergence herbicide: diflufenican (Brodal), 250 cc/ha; post-emergence herbicides: metsulfuron methyl (= sulfonylurea derivative; application: 6.7g/ha; DuPont) and dicamba (application: 0.121/ha); fungicide: epoxiconazole (Allegro, application: 0.85l/ha).

Fertilization: UREA $(NH_2)_2CO$: 125 kg/ha to blossom; thereafter 100 kg/ha.

**2. Production of the genetically modified flour**

200 kg of wheat grains of line TAAB 40A-11-8 were ground using a Bühler-Mahlautomat (Gebr. Bühler Maschinenfabrik, Uzwill, Switzerland). 200 kg of wheat grains yielded 140 kg of flour type 550 (yield 70%).

**3. Starch extraction**

The wheat starch was isolated from the wheat flour using distilled water by means of the Perten-Glutomatic machine (Perten Instruments), as described in ICC-Standard No. 155. The starch was extracted with acetone, air-dried for 2 to 3 days and then ground in a mortar to powder.

**4. Moisture measurement**

The moisture of the bread sample is determined using a moisturemeter (Sartorius, Göttingen, Germany). The sample is dried at 115°C until the weight no longer decreases. The calculation proceeds according to the formula:

$$\text{Moisture (\%)} = \frac{\text{initial weight} - \text{end weight}}{\text{initial weight}} \times 100$$

**5. Determination of the starch phosphate content in the C6 position (C6-P content)**

In the starch, positions C3 and C6 of the glucose units can be phosphorylated. To determine the C6-P content of the starch (as described by Nielsen et al., 1994, Plant Physiol. 105: 111-117), 100mg of wheat starch were hydrolyzed in 500$\mu$l of 0.7MHCl for 4 h at 95°C with continuous shaking. Subsequently, the batches were centrifuged for 10min at 13.000rpm and the supernatants purified from suspended matter and turbidity by means of a filter membrane (0.45$\mu$M). 20$\mu$l of the clear hydrolyzate were mixed with 180$\mu$l imidazole buffer (300mM imidazole, pH 7.4; 7.5 mM MgCl$_2$, 1 mM EDTA and 0.4mM NADP). The measurement was carried out in a photometer at 340 nm. After measurement of the base absorption, the enzyme reaction was started by adding 2 units of glucose-6-phosphate dehydrogenase (from *Leuconostoc mesenteroides,* Boehringer Mannheim). The change in absorption is based on equimolar reaction of glucose-6-phosphate and NADP to form 6-phosphono-gluconate and NADPH, the formation of NADPH being measured at the abovementioned wavelength. The reaction was followed until a plateau was reached. The result of this measurement is the content of glucose-6-phosphate in the hydrolyzate. From the identical hydrolyzate, on the basis of the content of glucose liberated, the degree of hydrolysis was determined. This is used to relate the content of glucose-6-phosphate to the fraction of hydrolyzed starch from the amount of fresh weight. For this 10$\mu$l of hydrolyzate were neutralized by 10$\mu$l of 0.7M NaOH and subsequently diluted 1:100 with water. 4 $\mu$l of this dilution were admixed with 196$\mu$l of measurement buffer (100mM imidazole pH6.9; 5 mM MgCl$_2$, 1 mM ATP, 0.4mM NADP) and used for determination of the base absorption. The reaction followed was by adding 2$\mu$l of enzyme mix (hexokinase 1:10; glucose-6-phosphate dehydrogenase from yeast 1:10 in measurement buffer) and at 340nm to the plateau. The measurement principle corresponds to the first reaction.
The result of this measurement gives the amount of glucose (in mg) which was liberated from the starch present in the starting material in the course of hydrolysis.
Subsequently, the results of both measurements are related, in order to express the content of glucose-6-phosphate per mg of hydrolyzed starch. Other than in the case of relating the amount of glucose-6-phosphate to the fresh weight of the sample, by this calculation the amount of glucose-6-phosphate is only based on the part of the starch which was completely hydrolyzed to glucose and thus is also to be considered the source for glucose-6-phosphate.

**6. Analytical data of the flours**

The TAAB flour and also the wild-type wheat flour were analyzed by standard methods of the International Association for Cereal Science and Technology (ICC/www.icc.or.at) or of the American Association of Cereal Chemists (AACC/www.aaccnet.org). The standard used in each case is listed in brackets. Since it can be requested on the respective internet page, it will not be described here again. The following parameters were studied:

     1. Ash content (ICC Standard 104/1)
     2. Protein content (ICC Standard 105/2)
     3. Wet gluten content (ICC Standard 137/1)
     4. Gluten Index (ICC Standard 155)
     5. Sedimentation value (ICC Standard 116/1)
     6. Damaged starch (AACC Method 76-31)
     7. Falling number (AACC Method 22-08)
     8. Farinograph (ICC Standard 115/1)

**7. Baking experiments procedure**

The baking experiments were carried out at Bayer BioScience GmbH (Potsdam, Germany) and also at the American Institute of Baking International (= AIBI; Kansas, USA) according to standard methods. Use was made for this not only of flour from genetically modified wheat plants but also flour from wild-type wheat plants as a control.
Figure 1 shows an overview of the various baking processes which are described hereinafter under 7.1. - 7.4.

## Direct dough procedure
## (Rolls, baguettes, white pan bread)

## Indirect dough procedure
## (White pan bread, hamburger buns)

Fig. 1: Sequence diagram of various baking processes

**Compositions and methods of the baking experiments:**

9

**7.1 Starter and dough for white pan breads (WPB)**

| Ingredients | Baker %* |
|---|---|
| Starter: | |
| Flour | 70.0 |
| Yeast (fresh) | 2.0 |
| Food yeast (without oxidants) | 0.5 |
| Emulsifier SSL (sodium stearoyl lactylate) | 0.5 |
| Water | 42.0 |
| Dough: | |
| Flour | 30.0 |
| Granulated sugar | 7.0 |
| Baking fat | 3.0 |
| Salt | 2.0 |
| Calcium propionate | 0.25 |
| Water[a] | variable (17.0) |

[a]Water is calculated on the basis of 59% of the amount of flour
*Flour is set at 100%, the other components are then added thereto

| | |
|---|---|
| Mixer: | Hobart A-120 Mixer (Hobart Corporation/OH/USA) withMcDuffee bowl and fork kneading attachment |
| Starter: | Mixing the ingredients for 1 minute at speed 1 (= 104 rpm) Further mixing for 1 minute at speed 1. Dough temperature after mixing: 26°C $\pm$ 1°C. |
| Fermentation: | Fermentation proceeds at 29°C for 4 hours in a foil-covered vessel |
| Dough: | The dough ingredients are mixed in a dough bowl for 30 seconds at speed 1 (= 104 rpm). Addition of starter and mixing for a further 30 seconds at speed 1 (= 104 rpm) Mixing the dough at speed 2 (194 rpm) to optimum gluten development (recognizable on squeezing the dough between fingers). Ideal dough temperature is 26°C $\pm$ 1°C |
| Proof time: | Proofing the dough for 20 minutes at 29°C in a covered vessel. |
| Dividing | into 2 loaves per batch (524 g per loaf) |
| Intermediate fermentation: | Dough pieces (524 g) proof for 10 minutes at room temperature |
| Forming: | Roller forming machine |
| | Dimensions: top roll: 0.87 cm; bottom roll: 0.67 cm; Press plate: 3.1 cm; press plate width: 23 cm. |
| Fermentation: | The formed loaves are placed into bread molds in the fermentation cabinet at 43°C and 81.5% relative humidity. The dough should expand up to 1.5 cm above the top rim of the bread mold. |
| Baking: | 20 minutes at 215°C |
| Bread mold dimensions: | Top (inside): 25 x 10.8 cm |
| (estimated) | Bottom (outside): 24.1 x 7.6 cm. |
| | Depth (inside): 7 cm |

**7.2. Starter and dough for hamburger buns**

| Ingredients | Baker %* |
|---|---|
| Starter: | |
| Flour | 70.0 |
| Yeast (fresh) | 3.0 |
| Water | 46.0 |
| Emulsifier SSL (sodium stearoyl | 0.5 |

(continued)

| Ingredients | Baker %* |
|---|---|
| lactylate) | |
| Food yeast | 0.3 |
| Dough: | |
| Flour | 30.0 |
| High fructose corn syrup (42%) | 18.0 |
| Baking fat | 6.0 |
| Salt | 2.0 |
| Ascorbic acid | 60 ppm |
| Water | variable |
| Calcium propionate | 0.12 |

* Flour is set at 100%, the other components are then added thereto

| | |
|---|---|
| Mixer: | Hobart A-120 Mixer (Hobart Corporation/OH/USA) with McDuffee bowl and fork kneading attachment |
| Mixing dough: | Mixing the ingredients for 1 minute at speed 1 (104 rpm). Further mixing for 1 minute at speed 1 (104 rpm). After mixing the mixing dough should have a temperature of 26°C $\pm$ 1°C |
| Fermentation: | The fermentation proceeds at 29°C for 3.5 hours in a foil covered vessel |
| Bread dough: | The dough ingredients are mixed in a mixing bowl for 30 seconds at speed 1 (104 rpm). Addition of the mixing dough and mixing for a further 30 seconds at speed 1 Mixing the dough at speed 2 (194 rpm) up to optimum gluten development. Ideal dough temperature is 26°C $\pm$ 1°C |
| Proof time: | Proofing the completely mixed dough for 10 minutes at 29°C in a covered vessel. |
| Intermediate | step: Dividing the dough into pieces of 56 g which are brought into a round flat form |
| Piece proof: | The formed loaves are placed into bread molds and introduced into the fermentation cabinet at 43°C and 90% relative humidity. The dough should expand to 3.6 cm. |
| Baking: | 11 minutes at 224°C |
| Bread dimensions: | Weight (g) and volume (cc); measurement proceeds 30 minutes after baking. |

### 7.3 Prebaked frozen baguettes

| Ingredients | Baker %* |
|---|---|
| Flour | 100 |
| Salt | 2.0 |
| Baking agent | variable |
| [a]Water | variable |
| Yeast (fresh) | 2.0 |

[a]Water as determined by the faringraph (+ 3%)
* Flour is set at 100%, the other components are then added thereto

| | |
|---|---|
| Mixer: | Spiral mixer (Diosna, 22I - Diosna Dierks & Söhne GmbH, Osnabruck/Germany) |
| Mix: | Two minutes at speed one (100 rpm) Three minutes at speed two (200 rpm) Desired dough temperature is 24°C. |
| Proof : | 20 minutes |
| Division: | Divide dough into dough pieces of 115g, round by hand and form into the length |
| Piece proof: | The formed loaves are placed into baguette molds and fermented in the fermentation cabinet for 90 minutes at 24°C and 87% relative humidity |
| Baking: | 30 sec at 240°C |
| | 2.00 min at 210°C |

(continued)

15.30 min at 200°C

During the baking process, the baguettes were sprayed with 80ml of $H_2O$.

Freezing:           Prebaked baguettes are frozen at -70°C for 1 h, thereafter stored in the deep freeze at -18°C

Baking out:        After storage for one week, the prebaked baguettes are end-baked at 215°C for 12minutes.

### 7.4 Rolls

| Ingredients | Baker %* |
| --- | --- |
| Flour | 100 |
| Salt | 2.0 |
| Yeast (fresh) | 6.0 |
| Baking fat | 1.0 |
| Sugar | 1.0 |
| Baking agent | variable |
| Water[a] | variable |
| [a]Water as determined by the farinograph | |

Mix:          Two minutes at speed one (100 rpm) Three minutes at speed two (200 rpm). Desired dough temperature = 27°C.

Proof:        20 minutes

Scale:        The dough is placed onto a forming plate and divided into 30 dough pieces using a dividing and rounding machine

Piece proof:     The forming plate with the divided and formed dough is stored in the fermentation cabinet for 35 minutes at 32°C and 87% relative humidity

Baking:       30 sec at 240°C
                 2.00 min at 210°C
            15.30 min at 200°C

During the baking process the rolls are sprayed with 80 ml of $H_2O$.

## 8. Calculation for the synergistic action of a combination of two active compounds

The action to be expected (reduction of baking loss) for a given combination of a modified flour with an additive (baking agent) can be calculated as follows (Kaiser 2006, oral communication):

When

x0 expresses the functionality of the standard flour (nontransgenic) without additive and
y0 expresses the functionality of a modified flour,
then the effect of standard flour + baking agent additive z is described by:

$$X(z) \text{ where } X(z) = x0 \text{ for } z = 0,$$

and
modified flour + baking agent additive z is described by:

$$Y(z) \text{ where } Y(z) = y0 \text{ for } z = 0.$$

Those skilled in the art expect an improvement when a modified flour is used compared with standard flour, when the action of modified flour + additive behaves as:

$$Y'(z) = X(z) + y0 - x0$$

There is a synergistic effect when: Y(z) is greater than Y'(z).

Here it is expected that max {Y(z): z > 0} > max{X(z): z > 0}, a still better effect when:

$$\max\{Y(z): z > 0\} - \max\{X(z): z > 0\} > y0 - x0.$$

*Equally, a synergistic effect can also be indicated by an effect increased markedly earlier with smaller addition of baking agent,*
*that is to say when the following applies*

$$Y(z') > = X(z) - x0 + y0 \text{ for a } z' \text{ where } 0 < z' < z$$

**Examples**

**Example 1: Production of genetically modified wheat plants**

The vector pUbiR1 which was used for transformation of the wheat plants was produced as described in WO 02/034923 (example 1). Likewise, in WO 02/034923 (example 2) production is described of the genetically modified wheat plants which carry the R1 gene from potatoes *(Solanum tuberosum).*

For the process according to the invention, genetically modified wheat plants of line TAAB 40A-11-8 were used. Seed material of this line and also of the unmodified wheat "Florida" (hereinafter termed "wild type") was planted as seed in Argentina and harvested.

**Example 2: Compilation of the properties of wheat flour of the genetically modified line compared with unmodified flour**

Analysis of the wheat flours was performed according to standard methods of the ICC or of the American Association of Cereal Chemists (AACC). The following parameters were studied:
1. Ash content (ICC 104/1)
2. Protein content (ICC 105/2)
3. Wet gluten content (ICC 137/1)
4. Gluten index (ICC 155)
5. Sedimentation value (ICC 116/1)
6. Damaged starch (AACC 76-31)
7. Falling number (AACC 22-08)
8. Farinograph (ICC 115/1)

Table 1: Analytical data of the flours:

| Parameter | Wild type | TAAB 40A-11-8 |
|---|---|---|
| Ash content (%) | 0.56 | 0.58 |
| Protein % (Kjeldahl) | 13.8 | 14.5 |
| Wet qluten content (%) | 31 | 33 |
| Gluten index (%) | 80 | 76 |
| Sedimentation value (ml) | 38 | 39 |

(continued)

| Parameter | Wild type | TAAB 40A-11-8 |
|---|---|---|
| Damaged starch (%) | 5 | 5.6 |
| Falling number (s) | 418 | 451 |
| Farinograph: | | |
| Water absorption (%) | 58 | 62 |
| Dough development time (min) | 6 | 6.5 |
| Dough stability (min) | 10 | 11 |

Comparison of the analytical data shows that the modified TAAB flour, with retention of quality parameters, had a higher water absorption value than the unmodified wild-type flour.

**Example 3: Compilation of the properties of wheat starch of the genetically modified line compared with wild type**

Table 2: Properties of the wheat starches: compilation of the parameters and results described in WO02/034923

| Line | | Wild type | TAAB 40A-11-8 |
|---|---|---|---|
| C-6-P in nmol/mg of starch | | Not detectable | 5.0 |
| RVA | Max | 100% | 124% |
| | Min | 100% | 132% |
| | Fin | 100% | 135% |
| | T | 100% | 97% |
| Gel strength | | 100% | 164% |
| DSC | Tpeak | 64°C | 61°C |
| | Tonset | 58°C | 56°C |

**Example 4: Results of the baking experiments**

Table 3: Weight losses and liquid losses and also yields of various baking products after baking using baking agent (emulsifier SSL 0.5%)

| | WPB | | Buns | |
|---|---|---|---|---|
| | TAAB | WT | TAAB | WT |
| Weight loss % | 10.6 | 11.1 | 13.0 | 13.2 |
| Water loss / Water in dough % | 24.9 | 27.0 | 32.8 | 36.3 |
| Bread moisture % | 35.7 | 33.9 | 27.9 | 25.5 |
| Bread moisture / volume (mg/ml) | 71 | 66 | 56 | 49 |
| Dough yield% | 176.3 | 172.0 | 178.9 | 174.9 |
| Baked yield (%) | 154.7 | 150.6 | 155.6 | 150.6 |

Comparison of the products of genetically modified (TAAB) and unmodified wheat flour (WT). WPB = white pan bread/ buns = hamburger buns.

Baking loss is the weight loss during baking owing to water evaporation. The baking loss in percent is fundamentally based on the dough weight, it is calculated as follows:

$$\text{Baking loss (\%)} = \frac{\text{dough weight} - \text{bread weight}}{\text{dough weight}} \times 100$$

The results show that the weight loss of the bakery products from modified wheat flour is lower as a percentage than with the wild type.

Relating the weight loss to the amount of water present in the dough, the actual water loss can be calculated:

$$\text{Water loss (\%)} = \frac{\text{dough weight} - \text{bread weight}}{\text{dough water}} \times 100$$

The water loss is calculated from the height of water addition which is different from the different flours and their water binding capacity in order to obtain the same dough consistency. The liquid loss of the bakery products of modified wheat flour is also less than that of the bakery products which were produced from unmodified flour.

The bread moisture based on the volume for all bakery products made from modified wheat flour was significantly higher than with the bakery products from unmodified wheat flour. The increased bread moisture has a beneficial effect on improved freshness retention of bakery products (extended shelf life).

The moisture was calculated as follows:

$$\text{Moisture (\%)} = \frac{\text{initial weight} - \text{end weight}}{\text{initial weight}} \times 100$$

## Claims

1. A composition comprising wheat flour having a phosphate content of at least 2 $\mu$mol of C-6-P/g of starch in combination with at least one baking agent in an amount which reduces baking losses more greatly than compositions which comprise wheat flour having a phosphate content of less than 2 $\mu$mol of C-6-P/g of starch, wherein the baking agent is selected from xanthan, carboxymethyl cellulose, carob bean meal, an emulsifier, guar seed meal or soy flour.

2. The composition as claimed in claim 1, wherein the emulsifier is sodium stearoyl-2-lactylate.

3. The composition as claimed in claim 1 or 2, wherein the amount of emulsifier added to the flour is between 0.1 and 2%.

4. The composition as claimed in one of claims 1 to 3, wherein the starch of the wheat flour was phosphorylated by means of a genetic engineering process.

5. The use of a composition as claimed in one of claims 1 to 4 for reducing baking losses.

## Patentansprüche

1. Zusammensetzung enthaltend Weizenmehl mit einem Phosphatgehalt von mindestens 2 $\mu$mol C-6-P/g Stärke in Kombination mit mindestens einem Backmittel in einer Menge, die Backverluste stärker vermindert als Zusammensetzungen, die Weizenmehl mit einem Phosphatgehalt von weniger als 2 $\mu$mol C-6-P/g Stärke enthalten, wobei das Backmittel aus Xanthan, Carboxymethylcellulose, Johannisbrotkernmehl, einem Emulgator, Guarkernmehl oder Sojamehl ausgewählt ist.

2. Zusammensetzung nach Anspruch 1, wobei es sich bei dem Emulgator um Natriumstearoyl-2-lactylat handelt.

3. Zusammensetzung nach Anspruch 1 oder 2, wobei die dem Mehl zugesetzte Emulgatormenge zwischen 0,1 und 2% beträgt.

4. Zusammensetzung nach einem der Ansprüche 1 bis 3, wobei die Stärke des Weizenmehls mittels eines gentechnischen Verfahrens phosphoryliert wurde.

5. Verwendung einer Zusammensetzung nach einem der Ansprüche 1 bis 4 zum Vermindern von Backverlusten.

## Revendications

1. Composition comprenant de la farine de blé ayant une teneur en phosphate d'au moins 2 $\mu$mol de C-6-P/g d'amidon en combinaison avec au moins un agent de cuisson dans une quantité qui réduit les pertes à la cuisson dans une mesure plus importante que des compositions qui comprennent de la farine de blé ayant une teneur en phosphate inférieure à 2 $\mu$mol de C-6-P/g d'amidon, l'agent de cuisson étant sélectionné parmi le xanthane, la carboxyméthylcellulose, la farine de graines de caroube, un émulsifiant, la farine de graines de guar ou la farine de soja.

**2.** Composition selon la revendication 1, dans laquelle l'émulsifiant est du stéaroyl-2-lactylate de sodium.

**3.** Composition selon la revendication 1 ou 2, dans laquelle la quantité d'émulsifiant ajoutée à la farine est comprise entre 0,1 et 2 %.

**4.** Composition selon l'une quelconque des revendications 1 à 3, dans laquelle l'amidon de la farine de blé a été phosphorylé au moyen d'un processus d'ingénierie génétique.

**5.** Utilisation d'une composition selon l'une quelconque des revendications 1 à 4 pour réduire les pertes à la cuisson.

**EP 2 028 944 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0234923 A
- WO 02034923 A
- EP 06090088 A
- US 60808337 B

### Non-patent literature cited in the description

- **NIELSEN et al.** *Plant Physiol.,* 1994, vol. 105, 111-117
- **LORBERTH et al.** *Nature Biotechnology,* 1998, vol. 16, 473-477
- **SIDHU ; BAWA.** *Int. Journal of Food Properties,* 2002, vol. 5 (1), 1-11
- **SIDHU ; BAWA.** *Int. Journal of Food Properties,* 2000, vol. 3 (3), 407-419
- **BECKER et al.** *Plant J.,* 1994, vol. 5 (2), 229-307

SEQUENCE LISTING

<110> Bayer CropScience AG

<120> Composition for reducing baking losses

<130> BCS 06-5008 PCT

<150> EP 06090088.3
<151> 2006-05-24

<150> US 60/808,337
<151> 2006-05-25

<160> 2

<170> PatentIn version 3.3

<210> 1
<211> 4851
<212> DNA
<213> Solanum tuberosum

<220>
<221> CDS
<222> (105)..(4499)

<300>

<308> EMBL / Y09533
<309> 1998-07-30
<313> (105)..(4499)

<400> 1

```
catcttcatc gaatttctcg aagcttcttc gctaatttcc tggtttcttc actcaaaatc        60

gacgtttcta gctgaacttg agtgaattaa gccagtggga ggat atg agt aat tcc        116
                                                  Met Ser Asn Ser
                                                  1

tta ggg aat aac ttg ctg tac cag gga ttc cta acc tca aca gtg ttg        164
Leu Gly Asn Asn Leu Leu Tyr Gln Gly Phe Leu Thr Ser Thr Val Leu
5                   10                  15                  20

gaa cat aaa agt aga atc agt cct cct tgt gtt gga ggc aat tct ttg        212
Glu His Lys Ser Arg Ile Ser Pro Pro Cys Val Gly Gly Asn Ser Leu
                25                  30                  35

ttt caa caa caa gtg atc tcg aaa tca cct tta tca act gag ttt cga        260
Phe Gln Gln Gln Val Ile Ser Lys Ser Pro Leu Ser Thr Glu Phe Arg
```

                    40                        45                          50

ggt aac agg tta aag gtg cag aaa aag aaa ata cct atg gaa aag aag          308
Gly Asn Arg Leu Lys Val Gln Lys Lys Lys Ile Pro Met Glu Lys Lys
        55                    60                    65

cgt gct ttt tct agt tct cct cat gct gta ctt acc act gat acc tct          356
Arg Ala Phe Ser Ser Ser Pro His Ala Val Leu Thr Thr Asp Thr Ser
        70                    75                    80

tct gag cta gca gaa aag ttc agt cta ggg ggg aat att gag cta cag          404
Ser Glu Leu Ala Glu Lys Phe Ser Leu Gly Gly Asn Ile Glu Leu Gln
85                        90                    95                    100

gtt gat gtt agg cct ccc act tca ggt gat gtg tcc ttt gtg gat ttt          452
Val Asp Val Arg Pro Pro Thr Ser Gly Asp Val Ser Phe Val Asp Phe
                105                   110                   115

caa gta aca aat ggt agt gat aaa ctg ttt ttg cac tgg ggg gca gta          500
Gln Val Thr Asn Gly Ser Asp Lys Leu Phe Leu His Trp Gly Ala Val
                120                   125                   130

aaa ttc ggg aaa gaa aca tgg tct ctt ccg aat gat cgt cca gat ggg          548
Lys Phe Gly Lys Glu Thr Trp Ser Leu Pro Asn Asp Arg Pro Asp Gly
                135                   140                   145

acc aaa gtg tac aag aac aaa gca ctt aga act cca ttt gtt aaa tct          596
Thr Lys Val Tyr Lys Asn Lys Ala Leu Arg Thr Pro Phe Val Lys Ser
                150                   155                   160

ggc tct aac tcc atc ctg aga ctg gag ata cga gac act gct atc gaa          644
Gly Ser Asn Ser Ile Leu Arg Leu Glu Ile Arg Asp Thr Ala Ile Glu
165                   170                   175                   180

gct att gag ttt ctc ata tac gat gaa gcc cac gat aaa tgg ata aag          692
Ala Ile Glu Phe Leu Ile Tyr Asp Glu Ala His Asp Lys Trp Ile Lys
                    185                   190                   195

aat aat ggt ggt aat ttt cgt gtc aaa ttg tca aga aaa gag ata cga          740
Asn Asn Gly Gly Asn Phe Arg Val Lys Leu Ser Arg Lys Glu Ile Arg
                200                   205                   210

ggc cca gat gtt tct gtt cct gag gag ctt gta cag atc caa tca tat          788
Gly Pro Asp Val Ser Val Pro Glu Glu Leu Val Gln Ile Gln Ser Tyr
                215                   220                   225

ttg agg tgg gag agg aag gga aaa cag aat tac ccc cct gag aaa gag          836
Leu Arg Trp Glu Arg Lys Gly Lys Gln Asn Tyr Pro Pro Glu Lys Glu
                230                   235                   240

17

```
aag gag gaa tat gag gct gct cga act gtg cta cag gag gaa ata gct    884
Lys Glu Glu Tyr Glu Ala Ala Arg Thr Val Leu Gln Glu Glu Ile Ala
245             250             255             260

cgt ggt gct tcc ata cag gac att cga gca agg cta aca aaa act aat    932
Arg Gly Ala Ser Ile Gln Asp Ile Arg Ala Arg Leu Thr Lys Thr Asn
                265             270             275

gat aaa agt caa agc aaa gaa gag cct ctt cat gta aca aag agt gat    980
Asp Lys Ser Gln Ser Lys Glu Glu Pro Leu His Val Thr Lys Ser Asp
                280             285             290

ata cct gat gac ctt gcc caa gca caa gct tac att agg tgg gag aaa    1028
Ile Pro Asp Asp Leu Ala Gln Ala Gln Ala Tyr Ile Arg Trp Glu Lys
            295             300             305

gca gga aag ccg aac tat cct cca gaa aag caa att gaa gaa ctc gaa    1076
Ala Gly Lys Pro Asn Tyr Pro Pro Glu Lys Gln Ile Glu Glu Leu Glu
        310             315             320

gaa gca aga aga gaa ttg caa ctt gag ctt gag aaa ggc att acc ctt    1124
Glu Ala Arg Arg Glu Leu Gln Leu Glu Leu Glu Lys Gly Ile Thr Leu
325             330             335             340

gat gag ttg cgg aaa acg att aca aaa ggg gag ata aaa act aag gtg    1172
Asp Glu Leu Arg Lys Thr Ile Thr Lys Gly Glu Ile Lys Thr Lys Val
                345             350             355

gaa aag cac ctg aaa aga agt tct ttt gcc gtt gaa aga atc caa aga    1220
Glu Lys His Leu Lys Arg Ser Ser Phe Ala Val Glu Arg Ile Gln Arg
                360             365             370

aag aag aga gac ttt ggg cat ctt att aat aag tat act tcc agt cct    1268
Lys Lys Arg Asp Phe Gly His Leu Ile Asn Lys Tyr Thr Ser Ser Pro
            375             380             385

gca gta caa gta caa aag gtc ttg gaa gaa cca cca gcc tta tct aaa    1316
Ala Val Gln Val Gln Lys Val Leu Glu Glu Pro Pro Ala Leu Ser Lys
        390             395             400

att aag ctg tat gcc aag gag aag gag gag cag att gat gat ccg atc    1364
Ile Lys Leu Tyr Ala Lys Glu Lys Glu Glu Gln Ile Asp Asp Pro Ile
405             410             415             420

cta aat aaa aag atc ttt aag gtc gat gat ggg gag cta ctg gta ctg    1412
Leu Asn Lys Lys Ile Phe Lys Val Asp Asp Gly Glu Leu Leu Val Leu
                425             430             435

gta gca aag tcc tct ggg aag aca aaa gta cat cta gct aca gat ctg    1460
Val Ala Lys Ser Ser Gly Lys Thr Lys Val His Leu Ala Thr Asp Leu
```

440           445           450

```
aat cag cca att act ctt cac tgg gca tta tcc aaa agt cct gga gag        1508
Asn Gln Pro Ile Thr Leu His Trp Ala Leu Ser Lys Ser Pro Gly Glu
        455             460             465

tgg atg gta cca cct tca agc ata ttg cct cct ggg tca att att tta        1556
Trp Met Val Pro Pro Ser Ser Ile Leu Pro Pro Gly Ser Ile Ile Leu
    470             475             480

gac aag gct gcc gaa aca cct ttt tca gcc agt tct tct gat ggt cta        1604
Asp Lys Ala Ala Glu Thr Pro Phe Ser Ala Ser Ser Ser Asp Gly Leu
485             490             495             500

act tct aag gta caa tct ttg gat ata gta att gaa gat ggc aat ttt        1652
Thr Ser Lys Val Gln Ser Leu Asp Ile Val Ile Glu Asp Gly Asn Phe
            505             510             515

gtg ggg atg cca ttt gtt ctt ttg tct ggt gaa aaa tgg att aag aac        1700
Val Gly Met Pro Phe Val Leu Leu Ser Gly Glu Lys Trp Ile Lys Asn
        520             525             530

caa ggg tcg gat ttc tat gtt ggc ttc agt gct gca tcc aaa tta gca        1748
Gln Gly Ser Asp Phe Tyr Val Gly Phe Ser Ala Ala Ser Lys Leu Ala
        535             540             545

ctc aag gct gct ggg gat ggc agt gga act gca aag tct tta ctg gat        1796
Leu Lys Ala Ala Gly Asp Gly Ser Gly Thr Ala Lys Ser Leu Leu Asp
    550             555             560

aaa ata gca gat atg gaa agt gag gct cag aag tca ttt atg cac cgg        1844
Lys Ile Ala Asp Met Glu Ser Glu Ala Gln Lys Ser Phe Met His Arg
565             570             575             580

ttt aat att gca gct gac ttg ata gaa gat gcc act agt gct ggt gaa        1892
Phe Asn Ile Ala Ala Asp Leu Ile Glu Asp Ala Thr Ser Ala Gly Glu
            585             590             595

ctt ggt ttt gct gga att ctt gta tgg atg agg ttc atg gct aca agg        1940
Leu Gly Phe Ala Gly Ile Leu Val Trp Met Arg Phe Met Ala Thr Arg
            600             605             610

caa ctg ata tgg aac aaa aac tat aac gta aaa cca cgt gaa ata agc        1988
Gln Leu Ile Trp Asn Lys Asn Tyr Asn Val Lys Pro Arg Glu Ile Ser
        615             620             625

aag gct cag gac aga ctt aca gac ttg ttg cag aat gct ttc acc agt        2036
Lys Ala Gln Asp Arg Leu Thr Asp Leu Leu Gln Asn Ala Phe Thr Ser
        630             635             640
```

```
cac cct cag tac cgt gaa att ttg cgg atg att atg tca act gtt gga    2084
His Pro Gln Tyr Arg Glu Ile Leu Arg Met Ile Met Ser Thr Val Gly
645             650             655             660

cgt gga ggt gaa ggg gat gta gga cag cga att agg gat gaa att ttg    2132
Arg Gly Gly Glu Gly Asp Val Gly Gln Arg Ile Arg Asp Glu Ile Leu
            665             670             675

gtc atc cag agg aac aat gac tgc aag ggt ggt atg atg caa gaa tgg    2180
Val Ile Gln Arg Asn Asn Asp Cys Lys Gly Gly Met Met Gln Glu Trp
            680             685             690

cat cag aaa ttg cat aat aat act agt cct gat gat gtt gtg atc tgt    2228
His Gln Lys Leu His Asn Asn Thr Ser Pro Asp Asp Val Val Ile Cys
        695             700             705

cag gca tta att gac tac atc aag agt gat ttt gat ctt ggt gtt tat    2276
Gln Ala Leu Ile Asp Tyr Ile Lys Ser Asp Phe Asp Leu Gly Val Tyr
        710             715             720

tgg aaa acc ctg aat gag aac gga ata aca aaa gag cgt ctt ttg agt    2324
Trp Lys Thr Leu Asn Glu Asn Gly Ile Thr Lys Glu Arg Leu Leu Ser
725             730             735             740

tat gac cgt gct atc cat tct gaa cca aat ttt aga gga gat caa aag    2372
Tyr Asp Arg Ala Ile His Ser Glu Pro Asn Phe Arg Gly Asp Gln Lys
            745             750             755

ggt ggt ctt ttg cgt gat tta ggt cac tat atg aga aca ttg aag gca    2420
Gly Gly Leu Leu Arg Asp Leu Gly His Tyr Met Arg Thr Leu Lys Ala
        760             765             770

gtt cat tca ggt gca gat ctt gag tct gct att gca aac tgc atg ggc    2468
Val His Ser Gly Ala Asp Leu Glu Ser Ala Ile Ala Asn Cys Met Gly
        775             780             785

tac aaa act gag gga gaa ggc ttt atg gtt gga gtc cag ata aat cct    2516
Tyr Lys Thr Glu Gly Glu Gly Phe Met Val Gly Val Gln Ile Asn Pro
        790             795             800

gta tca ggc ttg cca tct ggc ttt cag gac ctc ctc cat ttt gtc tta    2564
Val Ser Gly Leu Pro Ser Gly Phe Gln Asp Leu Leu His Phe Val Leu
805             810             815             820

gac cat gtg gaa gat aaa aat gtg gaa act ctt ctt gag aga ttg cta    2612
Asp His Val Glu Asp Lys Asn Val Glu Thr Leu Leu Glu Arg Leu Leu
            825             830             835

gag gct cgt gag gag ctt agg ccc ttg ctt ctc aaa cca aac aac cgt    2660
Glu Ala Arg Glu Glu Leu Arg Pro Leu Leu Leu Lys Pro Asn Asn Arg
```

```
                840                        845                        850

cta aag gat ctg ctg ttt ttg gac ata gca ctt gat tct aca gtt aga    2708
Leu Lys Asp Leu Leu Phe Leu Asp Ile Ala Leu Asp Ser Thr Val Arg
        855                 860                 865

aca gca gta gaa agg gga tat gaa gaa ttg aac aac gct aat cct gag    2756
Thr Ala Val Glu Arg Gly Tyr Glu Glu Leu Asn Asn Ala Asn Pro Glu
        870                 875                 880

aaa atc atg tac ttc atc tcc ctc gtt ctt gaa aat ctc gca ctc tct    2804
Lys Ile Met Tyr Phe Ile Ser Leu Val Leu Glu Asn Leu Ala Leu Ser
885                 890                 895                 900

gtg gac gat aat gaa gat ctt gtt tat tgc ttg aag gga tgg aat caa    2852
Val Asp Asp Asn Glu Asp Leu Val Tyr Cys Leu Lys Gly Trp Asn Gln
                905                 910                 915

gct ctt tca atg tcc aat ggt ggg gac aac cat tgg gct tta ttt gca    2900
Ala Leu Ser Met Ser Asn Gly Gly Asp Asn His Trp Ala Leu Phe Ala
            920                 925                 930

aaa gct gtg ctt gac aga acc cgt ctt gca ctt gca agc aag gca gag    2948
Lys Ala Val Leu Asp Arg Thr Arg Leu Ala Leu Ala Ser Lys Ala Glu
            935                 940                 945

tgg tac cat cac tta ttg cag cca tct gcc gaa tat cta gga tca ata    2996
Trp Tyr His His Leu Leu Gln Pro Ser Ala Glu Tyr Leu Gly Ser Ile
        950                 955                 960

ctt ggg gtg gac caa tgg gct ttg aac ata ttt act gaa gaa att ata    3044
Leu Gly Val Asp Gln Trp Ala Leu Asn Ile Phe Thr Glu Glu Ile Ile
965                 970                 975                 980

cgt gct gga tca gca gct tca tta tcc tct ctt ctt aat aga ctc gat    3092
Arg Ala Gly Ser Ala Ala Ser Leu Ser Ser Leu Leu Asn Arg Leu Asp
            985                 990                 995

ccc gtg ctt cgg  aaa act gca aat cta  gga agt tgg cag att  atc      3137
Pro Val Leu Arg  Lys Thr Ala Asn Leu  Gly Ser Trp Gln Ile  Ile
            1000                 1005                 1010

agt cca gtt gaa  gcc gtt gga tat gtt  gtc gtt gtg gat gag  ttg      3182
Ser Pro Val Glu  Ala Val Gly Tyr Val  Val Val Val Asp Glu  Leu
            1015                 1020                 1025

ctt tca gtt cag  aat gaa atc tac gag  aag ccc acg atc tta  gta      3227
Leu Ser Val Gln  Asn Glu Ile Tyr Glu  Lys Pro Thr Ile Leu  Val
            1030                 1035                 1040
```

```
gca aaa tct gtt   aaa gga gag gag gaa   att cct gat ggt gct   gtt        3272
Ala Lys Ser Val   Lys Gly Glu Glu Glu   Ile Pro Asp Gly Ala   Val
            1045                  1050                  1055

gcc ctg ata aca   cca gac atg cca gat   gtt ctt tca cat gtt   tct        3317
Ala Leu Ile Thr   Pro Asp Met Pro Asp   Val Leu Ser His Val   Ser
            1060                  1065                  1070

gtt cga gct aga   aat ggg aag gtt tgc   ttt gct aca tgc ttt   gat        3362
Val Arg Ala Arg   Asn Gly Lys Val Cys   Phe Ala Thr Cys Phe   Asp
            1075                  1080                  1085

ccc aat ata ttg   gct gac ctc caa gca   aag gaa gga agg att   ttg        3407
Pro Asn Ile Leu   Ala Asp Leu Gln Ala   Lys Glu Gly Arg Ile   Leu
            1090                  1095                  1100

ctc tta aag cct   aca cct tca gac ata   atc tat agt gag gtg   aat        3452
Leu Leu Lys Pro   Thr Pro Ser Asp Ile   Ile Tyr Ser Glu Val   Asn
            1105                  1110                  1115

gag att gag ctc   caa agt tca agt aac   ttg gta gaa gct gaa   act        3497
Glu Ile Glu Leu   Gln Ser Ser Ser Asn   Leu Val Glu Ala Glu   Thr
            1120                  1125                  1130

tca gca aca ctt   aga ttg gtg aaa aag   caa ttt ggt ggt tgt   tac        3542
Ser Ala Thr Leu   Arg Leu Val Lys Lys   Gln Phe Gly Gly Cys   Tyr
            1135                  1140                  1145

gca ata tca gca   gat gaa ttc aca agt   gaa atg gtt gga gct   aaa        3587
Ala Ile Ser Ala   Asp Glu Phe Thr Ser   Glu Met Val Gly Ala   Lys
            1150                  1155                  1160

tca cgt aat att   gca tat ctg aaa gga   aaa gtg cct tcc tcg   gtg        3632
Ser Arg Asn Ile   Ala Tyr Leu Lys Gly   Lys Val Pro Ser Ser   Val
            1165                  1170                  1175

gga att cct acg   tca gta gct ctt cca   ttt gga gtc ttt gag   aaa        3677
Gly Ile Pro Thr   Ser Val Ala Leu Pro   Phe Gly Val Phe Glu   Lys
            1180                  1185                  1190

gta ctt tca gac   gac ata aat cag gga   gtg gca aaa gag ttg   caa        3722
Val Leu Ser Asp   Asp Ile Asn Gln Gly   Val Ala Lys Glu Leu   Gln
            1195                  1200                  1205

att ctg atg aaa   aaa cta tct gaa gga   gac ttc agc gct ctt   ggt        3767
Ile Leu Met Lys   Lys Leu Ser Glu Gly   Asp Phe Ser Ala Leu   Gly
            1210                  1215                  1220

gaa att cgc aca   acg gtt tta gat ctt   tca gca cca gct caa   ttg        3812
Glu Ile Arg Thr   Thr Val Leu Asp Leu   Ser Ala Pro Ala Gln   Leu
```

22

```
                    1225                      1230                      1235

gtc aaa gag ctg  aag gag aag atg cag  ggt tct ggc atg cct  tgg     3857
Val Lys Glu Leu  Lys Glu Lys Met Gln  Gly Ser Gly Met Pro  Trp
        1240              1245                  1250

cct ggt gat gaa  ggt cca aag cgg tgg  gaa caa gca tgg atg  gcc     3902
Pro Gly Asp Glu  Gly Pro Lys Arg Trp  Glu Gln Ala Trp Met  Ala
        1255              1260                  1265

ata aaa aag gtg  tgg gct tca aaa tgg  aat gag aga gca tac  ttc     3947
Ile Lys Lys Val  Trp Ala Ser Lys Trp  Asn Glu Arg Ala Tyr  Phe
        1270              1275                  1280

agc aca agg aag  gtg aaa ctg gat cat  gac tat ctg tgc atg  gct     3992
Ser Thr Arg Lys  Val Lys Leu Asp His  Asp Tyr Leu Cys Met  Ala
        1285              1290                  1295

gtc ctt gtt caa  gaa ata ata aat gct  gat tat gca ttt gtc  att     4037
Val Leu Val Gln  Glu Ile Ile Asn Ala  Asp Tyr Ala Phe Val  Ile
        1300              1305                  1310

cac aca acc aac  cca tct tcc gga gac  gac tca gaa ata tat  gcc     4082
His Thr Thr Asn  Pro Ser Ser Gly Asp  Asp Ser Glu Ile Tyr  Ala
        1315              1320                  1325

gag gtg gtc agg  ggc ctt ggg gaa aca  ctt gtt gga gct tat  cca     4127
Glu Val Val Arg  Gly Leu Gly Glu Thr  Leu Val Gly Ala Tyr  Pro
        1330              1335                  1340

gga cgt gct ttg  agt ttt atc tgc aag  aaa aag gat ctc aac  tct     4172
Gly Arg Ala Leu  Ser Phe Ile Cys Lys  Lys Lys Asp Leu Asn  Ser
        1345              1350                  1355

cct caa gtg tta  ggt tac cca agc aaa  ccg atc ggc ctt ttc  ata     4217
Pro Gln Val Leu  Gly Tyr Pro Ser Lys  Pro Ile Gly Leu Phe  Ile
        1360              1365                  1370

aaa aga tct atc  atc ttc cga tct gat  tcc aat ggg gaa gat  ttg     4262
Lys Arg Ser Ile  Ile Phe Arg Ser Asp  Ser Asn Gly Glu Asp  Leu
        1375              1380                  1385

gaa ggt tat gcc  ggt gct ggc ctc tac  gac agt gta cca atg  gat     4307
Glu Gly Tyr Ala  Gly Ala Gly Leu Tyr  Asp Ser Val Pro Met  Asp
        1390              1395                  1400

gag gag gaa aaa  gtt gta att gat tac  tct tcc gac cca ttg  ata     4352
Glu Glu Glu Lys  Val Val Ile Asp Tyr  Ser Ser Asp Pro Leu  Ile
        1405              1410                  1415
```

```
act gat ggt aac  ttc cgc cag aca atc  ctg tcc aac att gct  cgt        4397
Thr Asp Gly Asn  Phe Arg Gln Thr Ile  Leu Ser Asn Ile Ala  Arg
            1420               1425               1430


gct gga cat gct  atc gag gag cta tat  ggc tct cct caa gac  att        4442
Ala Gly His Ala  Ile Glu Glu Leu Tyr  Gly Ser Pro Gln Asp  Ile
            1435               1440               1445


gag ggt gta gtg  agg gat gga aag att  tat gtc gtt cag aca  aga        4487
Glu Gly Val Val  Arg Asp Gly Lys Ile  Tyr Val Val Gln Thr  Arg
            1450               1455               1460


cca cag atg tga ttatattctc gttgtatgtt gttcagagaa gaccacagat          4539
Pro Gln Met


gtgatcatat tctcattgta tcagatctgt gaccacttac ctgatacctc ccatgaagtt    4599

acctgtatga ttatacgtga tccaaagcca tcacatcatg ttcaccttca gctattggag    4659

gagaagtgag aagtaggaat tgcaatatga ggaataataa gaaaaacttt gtaaaagcta    4719

aattagctgg gtatgatata gggagaaatg tgtaaacatt gtactatata tagtatatac    4779

acacgcatta tgtattgcat tatgcactga ataatatcgc agcatcaaag aagaaatcct    4839

ttgggtggtt tc                                                        4851
```

<210> 2
<211> 1464
<212> PRT
<213> Solanum tuberosum

<400> 2

```
Met Ser Asn Ser Leu Gly Asn Asn Leu Leu Tyr Gln Gly Phe Leu Thr
1               5                   10                  15


Ser Thr Val Leu Glu His Lys Ser Arg Ile Ser Pro Pro Cys Val Gly
            20                  25                  30


Gly Asn Ser Leu Phe Gln Gln Gln Val Ile Ser Lys Ser Pro Leu Ser
        35                  40                  45


Thr Glu Phe Arg Gly Asn Arg Leu Lys Val Gln Lys Lys Lys Ile Pro
    50                  55                  60
```

```
Met Glu Lys Lys Arg Ala Phe Ser Ser Ser Pro His Ala Val Leu Thr
65              70              75              80


Thr Asp Thr Ser Ser Glu Leu Ala Glu Lys Phe Ser Leu Gly Gly Asn
            85              90              95


Ile Glu Leu Gln Val Asp Val Arg Pro Pro Thr Ser Gly Asp Val Ser
            100             105             110


Phe Val Asp Phe Gln Val Thr Asn Gly Ser Asp Lys Leu Phe Leu His
            115             120             125


Trp Gly Ala Val Lys Phe Gly Lys Glu Thr Trp Ser Leu Pro Asn Asp
        130             135             140

                                                              .

Arg Pro Asp Gly Thr Lys Val Tyr Lys Asn Lys Ala Leu Arg Thr Pro
145             150             155             160


Phe Val Lys Ser Gly Ser Asn Ser Ile Leu Arg Leu Glu Ile Arg Asp
            165             170             175


Thr Ala Ile Glu Ala Ile Glu Phe Leu Ile Tyr Asp Glu Ala His Asp
            180             185             190


Lys Trp Ile Lys Asn Asn Gly Gly Asn Phe Arg Val Lys Leu Ser Arg
        195             200             205


Lys Glu Ile Arg Gly Pro Asp Val Ser Val Pro Glu Glu Leu Val Gln
        210             215             220


Ile Gln Ser Tyr Leu Arg Trp Glu Arg Lys Gly Lys Gln Asn Tyr Pro
225             230             235             240


Pro Glu Lys Glu Lys Glu Glu Tyr Glu Ala Ala Arg Thr Val Leu Gln
            245             250             255
```

25

Glu Glu Ile Ala Arg Gly Ala Ser Ile Gln Asp Ile Arg Ala Arg Leu
        260             265             270

Thr Lys Thr Asn Asp Lys Ser Gln Ser Lys Glu Glu Pro Leu His Val
        275             280             285

Thr Lys Ser Asp Ile Pro Asp Asp Leu Ala Gln Ala Gln Ala Tyr Ile
        290             295             300

Arg Trp Glu Lys Ala Gly Lys Pro Asn Tyr Pro Pro Glu Lys Gln Ile
305             310             315             320

Glu Glu Leu Glu Glu Ala Arg Arg Glu Leu Gln Leu Glu Leu Glu Lys
                325             330             335

Gly Ile Thr Leu Asp Glu Leu Arg Lys Thr Ile Thr Lys Gly Glu Ile
            340             345             350

Lys Thr Lys Val Glu Lys His Leu Lys Arg Ser Ser Phe Ala Val Glu
        355             360             365

Arg Ile Gln Arg Lys Lys Arg Asp Phe Gly His Leu Ile Asn Lys Tyr
        370             375             380

Thr Ser Ser Pro Ala Val Gln Val Gln Lys Val Leu Glu Glu Pro Pro
385             390             395             400

Ala Leu Ser Lys Ile Lys Leu Tyr Ala Lys Glu Lys Glu Glu Gln Ile
            405             410             415

Asp Asp Pro Ile Leu Asn Lys Lys Ile Phe Lys Val Asp Asp Gly Glu
        420             425             430

Leu Leu Val Leu Val Ala Lys Ser Ser Gly Lys Thr Lys Val His Leu
        435             440             445

Ala Thr Asp Leu Asn Gln Pro Ile Thr Leu His Trp Ala Leu Ser Lys
        450             455             460

26

```
Ser Pro Gly Glu Trp Met Val Pro Pro Ser Ser Ile Leu Pro Pro Gly
465             470         475             480

Ser Ile Ile Leu Asp Lys Ala Ala Glu Thr Pro Phe Ser Ala Ser Ser
                485             490             495

Ser Asp Gly Leu Thr Ser Lys Val Gln Ser Leu Asp Ile Val Ile Glu
            500             505             510

Asp Gly Asn Phe Val Gly Met Pro Phe Val Leu Leu Ser Gly Glu Lys
            515             520             525

Trp Ile Lys Asn Gln Gly Ser Asp Phe Tyr Val Gly Phe Ser Ala Ala
        530             535             540

Ser Lys Leu Ala Leu Lys Ala Ala Gly Asp Gly Ser Gly Thr Ala Lys
545             550             555             560

Ser Leu Leu Asp Lys Ile Ala Asp Met Glu Ser Glu Ala Gln Lys Ser
            565             570             575

Phe Met His Arg Phe Asn Ile Ala Ala Asp Leu Ile Glu Asp Ala Thr
            580             585             590

Ser Ala Gly Glu Leu Gly Phe Ala Gly Ile Leu Val Trp Met Arg Phe
            595             600             605

Met Ala Thr Arg Gln Leu Ile Trp Asn Lys Asn Tyr Asn Val Lys Pro
    610             615             620

Arg Glu Ile Ser Lys Ala Gln Asp Arg Leu Thr Asp Leu Leu Gln Asn
625             630             635             640

Ala Phe Thr Ser His Pro Gln Tyr Arg Glu Ile Leu Arg Met Ile Met
            645             650             655
```

27

Ser Thr Val Gly Arg Gly Gly Glu Gly Asp Val Gly Gln Arg Ile Arg
660 665 670

Asp Glu Ile Leu Val Ile Gln Arg Asn Asn Asp Cys Lys Gly Gly Met
675 680 685

Met Gln Glu Trp His Gln Lys Leu His Asn Asn Thr Ser Pro Asp Asp
690 695 700

Val Val Ile Cys Gln Ala Leu Ile Asp Tyr Ile Lys Ser Asp Phe Asp
705 710 715 720

Leu Gly Val Tyr Trp Lys Thr Leu Asn Glu Asn Gly Ile Thr Lys Glu
725 730 735

Arg Leu Leu Ser Tyr Asp Arg Ala Ile His Ser Glu Pro Asn Phe Arg
740 745 750

Gly Asp Gln Lys Gly Gly Leu Leu Arg Asp Leu Gly His Tyr Met Arg
755 760 765

Thr Leu Lys Ala Val His Ser Gly Ala Asp Leu Glu Ser Ala Ile Ala
770 775 780

Asn Cys Met Gly Tyr Lys Thr Glu Gly Glu Gly Phe Met Val Gly Val
785 790 795 800

Gln Ile Asn Pro Val Ser Gly Leu Pro Ser Gly Phe Gln Asp Leu Leu
805 810 815

His Phe Val Leu Asp His Val Glu Asp Lys Asn Val Glu Thr Leu Leu
820 825 830

Glu Arg Leu Leu Glu Ala Arg Glu Glu Leu Arg Pro Leu Leu Leu Lys
835 840 845

Pro Asn Asn Arg Leu Lys Asp Leu Leu Phe Leu Asp Ile Ala Leu Asp
850 855 860

Ser Thr Val Arg Thr Ala Val Glu Arg Gly Tyr Glu Glu Leu Asn Asn
865           870           875           880

Ala Asn Pro Glu Lys Ile Met Tyr Phe Ile Ser Leu Val Leu Glu Asn
            885           890           895

Leu Ala Leu Ser Val Asp Asp Asn Glu Asp Leu Val Tyr Cys Leu Lys
        900           905           910

Gly Trp Asn Gln Ala Leu Ser Met Ser Asn Gly Gly Asp Asn His Trp
    915           920           925

Ala Leu Phe Ala Lys Ala Val Leu Asp Arg Thr Arg Leu Ala Leu Ala
    930           935           940

Ser Lys Ala Glu Trp Tyr His His Leu Leu Gln Pro Ser Ala Glu Tyr
945           950           955           960

Leu Gly Ser Ile Leu Gly Val Asp Gln Trp Ala Leu Asn Ile Phe Thr
        965           970           975

Glu Glu Ile Ile Arg Ala Gly Ser Ala Ala Ser Leu Ser Ser Leu Leu
        980           985           990

Asn Arg Leu Asp Pro Val Leu Arg Lys Thr Ala Asn Leu Gly Ser Trp
    995           1000          1005

Gln Ile Ile Ser Pro Val Glu Ala Val Gly Tyr Val Val Val Val
    1010          1015          1020

Asp Glu Leu Leu Ser Val Gln Asn Glu Ile Tyr Glu Lys Pro Thr
    1025          1030          1035

Ile Leu Val Ala Lys Ser Val Lys Gly Glu Glu Glu Ile Pro Asp
    1040          1045          1050

```
Gly Ala  Val Ala Leu Ile Thr  Pro Asp Met Pro Asp  Val Leu Ser
    1055                1060            1065

His Val  Ser Val Arg Ala Arg  Asn Gly Lys Val Cys  Phe Ala Thr
    1070                1075            1080

Cys Phe  Asp Pro Asn Ile Leu  Ala Asp Leu Gln Ala  Lys Glu Gly
    1085                1090            1095

Arg Ile  Leu Leu Leu Lys Pro  Thr Pro Ser Asp Ile  Ile Tyr Ser
    1100                1105            1110

Glu Val  Asn Glu Ile Glu Leu  Gln Ser Ser Ser Asn  Leu Val Glu
    1115                1120            1125

Ala Glu  Thr Ser Ala Thr Leu  Arg Leu Val Lys Lys  Gln Phe Gly
    1130                1135            1140

Gly Cys  Tyr Ala Ile Ser Ala  Asp Glu Phe Thr Ser  Glu Met Val
    1145                1150            1155

Gly Ala  Lys Ser Arg Asn Ile  Ala Tyr Leu Lys Gly  Lys Val Pro
    1160                1165            1170

Ser Ser  Val Gly Ile Pro Thr  Ser Val Ala Leu Pro  Phe Gly Val
    1175                1180            1185

Phe Glu  Lys Val Leu Ser Asp  Asp Ile Asn Gln Gly  Val Ala Lys
    1190                1195            1200

Glu Leu  Gln Ile Leu Met Lys  Lys Leu Ser Glu Gly  Asp Phe Ser
    1205                1210            1215

Ala Leu  Gly Glu Ile Arg Thr  Thr Val Leu Asp Leu  Ser Ala Pro
    1220                1225            1230

Ala Gln  Leu Val Lys Glu Leu  Lys Glu Lys Met Gln  Gly Ser Gly
    1235                1240            1245
```

```
Met Pro Trp Pro Gly Asp Glu  Gly Pro Lys Arg Trp  Glu Gln Ala
    1250             1255              1260

Trp Met Ala Ile Lys Lys Val  Trp Ala Ser Lys Trp  Asn Glu Arg
    1265             1270              1275

Ala Tyr Phe Ser Thr Arg Lys  Val Lys Leu Asp His  Asp Tyr Leu
    1280             1285              1290

Cys Met Ala Val Leu Val Gln  Glu Ile Ile Asn Ala  Asp Tyr Ala
    1295             1300              1305

Phe Val Ile His Thr Thr Asn  Pro Ser Ser Gly Asp  Asp Ser Glu
    1310             1315              1320

Ile Tyr Ala Glu Val Val Arg  Gly Leu Gly Glu Thr  Leu Val Gly
    1325             1330              1335

Ala Tyr Pro Gly Arg Ala Leu  Ser Phe Ile Cys Lys  Lys Lys Asp
    1340             1345              1350

Leu Asn Ser Pro Gln Val Leu  Gly Tyr Pro Ser Lys  Pro Ile Gly
    1355             1360              1365

Leu Phe Ile Lys Arg Ser Ile  Ile Phe Arg Ser Asp  Ser Asn Gly
    1370             1375              1380

Glu Asp Leu Glu Gly Tyr Ala  Gly Ala Gly Leu Tyr  Asp Ser Val
    1385             1390              1395

Pro Met Asp Glu Glu Glu Lys  Val Val Ile Asp Tyr  Ser Ser Asp
    1400             1405              1410

Pro Leu Ile Thr Asp Gly Asn  Phe Arg Gln Thr Ile  Leu Ser Asn
    1415             1420              1425
```

```
Ile Ala  Arg Ala Gly His Ala  Ile Glu Glu Leu Tyr  Gly Ser Pro
    1430                1435                1440


Gln Asp  Ile Glu Gly Val Val  Arg Asp Gly Lys Ile  Tyr Val Val
    1445                1450                1455


Gln Thr  Arg Pro Gln Met
    1460
```